# EUROPEAN PATENT SPECIFICATION

(11) **EP 3 209 421 B1**
(45) Date of publication and mention of the grant of the patent: **27.03.2019**
(21) Application number: 15775372.4
(22) Date of filing: 21.09.2015
(51) Int. Cl.: B01L 9/06, B01F 9/00, G01N 35/04, B01F 9/12, G01N 35/00

(54) **ROTATABLE TUBE RACK HOLDER AND TUBE RACK ROTATOR DEVICE FOR TUBE RACKS**
DREHBARER PROBERÖHRCHENSTÄNDERHALTER UND PROBERÖHRCHENSTÄNDERDREHVORRICHTUNG FÜR PROBERÖHRCHENSTÄNDER
SUPPORT DE PORTE-TUBES ROTATIF ET DISPOSITIF DE ROTATION DE PORTE-TUBES POUR PORTE-TUBES

(30) Priority: 24.09.2014 DK 201470590
(43) Date of publication of application: 30.08.2017
(73) Proprietor: Rotapure Lab. Instruments IVS, 4681 Herfølge (DK)
(72) Inventor: SCHOU JAKOBSEN, Janus, DK-2000 Frederiksberg (DK); NIELSEN,Steen, Dk- 4881 Herfolge (DK)
(74) Representative: Høiberg P/S
(86) International application number: PCT/DK2015/050283
(87) International publication number: WO 2016/045680

(56) References cited:
- EP-A2- 2 495 045
- US-A- 2 662 752
- US-A1- 2010 302 899
- US-A1- 2014 133 264

## Description

### Field of invention

The present disclosure relates to a rotatable tube rack holder and tube rack rotator device for tube racks.

### Background of invention

Modern research or diagnostic laboratories are increasingly moving towards high through-put procedures. This is true for laboratories with a chemical or biological focus in industry (applied research) as well as academia (basic research) and the health care sector (clinical diagnostics). Many such high-throughput procedures are not fully automated, but involve work-flow steps that require a considerable amount of manual labor. These steps in the work-flow are often not only through-put limiting bottlenecks, but also arduous and time-consuming. Furthermore, hands-on steps in high through-put procedures are likely to be comprised of a large number of serially iterated monotonous movements. This represents very adverse ergonomics regimes and as such pose serious challenges to the work health environment. In order to take advantage of modern highly parallel testing methodologies (diagnostic and/or experimental), more efficient preparative procedures are necessary. Such methods should aim to reduce repetitive work-load during manual handling steps while increasing efficiency.

A prominent step requiring manual intervention is mixing or agitation of samples, often coupled with precipitation of a solid phase of the sample, e.g. by centrifugation. Mixing may be required for homogenization of samples, for instigation a reaction, for full constituent exposure in e.g. dual phase samples or for allowing other chemical or physical changes to take place prior to the ensuing step in the work flow.
A commonly used method of mixing is vortexing, consisting of a high-speed swirl of a typically elongated container containing the sample. Complete mixing by vortexing requires high speed swirling, which is an inefficient process. Further, such vigorous vortexing may be detrimental to the integrity of the sample or added testing components, especially in the case of biological samples such as tissues, cells or larger organic molecules. Complete, repetitive inversion of the sample comprises a more efficient and considerably gentler method of mixing.

Laboratory samples are generally stored in a range of containers, e.g. test tubes. Commercially available test tube rotators that allow mixing by full inversion of test tubes are available. These instruments, however, are limited by the number of test tubes that may be processed in parallel. A further serious limitation is the large amount of time-consuming and repetitive manual labor required to load and unload single test tubes from these rotators.

Test tubes generally adhere to category specific industry standards. The tubes may be handled as single units or in batches (i.e. a multiple of sample containers together). Available laboratory rotators exist that allow handling of test tubes in batch, being held in specific, proprietary racks. These racks, however, do generally not conform to category specific standards, thus precluding cross-platform usability or transferability. For example, such rotation tube racks cannot be directly transferred to other laboratory instruments, such as centrifuges, for further processing. Accordingly, all test tubes have to be loaded and unloaded individually. Furthermore, existing rotator systems for batch handling of test tubes involve complicated and laborious two-hand operations for attaching racks to rack receptacles on the rotator device. Hence, the existing rotator solutions for batch handling of samples are not significant improvements to the loading and unloading of single, individual test tubes.

EP 2 495 045 describes a holder for a thermal cycler.

Thus, there is a need in the art to overcome these and other deficiencies.

### Summary of invention

In order to address and solve the above described need and problems, a first general aspect of the present disclosure, relates to a rotatable tube rack holder for a tube rack rotator device, comprising: three or four plate(s) extending radially from an axis of rotation of the tube rack holder, wherein said plates are connected to each other; one or more compartment(s) for tightly holding one or more tube rack(s), each tube rack configured to hold a plurality of tubes, wherein said compartment(s) is/are attached to at least one side of said plate(s); and a locking mechanism for each of said compartment(s) and configured such that when said tube rack(s) holding a plurality of said tubes is/are placed inside said compartment, said tubes are restricted from moving in a direction perpendicular to said plate.

In another aspect of the present disclosure, the present disclosure provides a rotatable tube rack holder for a tube rack rotator device, comprising: three or four plate(s) extending radially from an axis of rotation of the tube rack holder, wherein said plates are connected to each other; one or more compartment(s) for tightly holding one or more tube rack(s), each tube rack configured to hold a plurality of tubes, wherein said compartment(s) is/are attached to at least one side of said plate(s) and configured such that said one or more tube rack(s) can be placed inside said compartment(s) from a direction substantially perpendicular to said plate(s); and a locking mechanism for each of said compartment(s) and configured such that when said tube rack(s) holding a plurality of said tubes is/are placed inside said compartment, said tubes are restricted from moving in a direction perpendicular to said plate.

An effect of the compartment(s) may be that it/they restrict(s) the tube rack(s) from moving in a direction in the plane of the plate(s). In this way, the tube rack(s) may be restricted from moving in all directions such that when rotated, they stay in place. An effect of having the compartment configured such that said one or more tube rack(s) can be placed inside said compartment(s) from a direction substantially perpendicular to said plate(s), is that this may allow the compartment(s) for tightly holding the one or more tube rack(s). In this way, there may be no requirement for adjusting the size of the compartments(s) in order to tightly hold the one or more tube rack(s). Another effect of having compartment configured such that said one or more tube rack(s) can be placed inside said compartment(s) from a direction substantially perpendicular to said plate(s), is that this may allow for placement of tubes in the rotatable tube rack holder placed in for example a box, such as a cooling box, with access only from above.

In relation to the rotatable tube rack holder, the present disclosure relates to a tube rack rotator device for rotating a rotatable tube rack holder, comprising: a drive configured for rotating said rotatable tube rack holder around an axis of rotation; a first mounting means configured for being mounted with said rotatable tube rack holder; a second mounting means comprising a bearing and located a distance along said axis of rotation such that said rotatable tube rack holder is able to be mounted between said first mounting means and said second mounting means; and stopping means configured such that said rotatable tube rack holder is able to be prevented from rotating.

An effect of the bearing is that is facilitates hiding of moving parts, thereby relating to safety. For example it prevents that hair gets into the end of the rotatable tube rack holder. Another effect of the bearing is that it facilitates stability. For example the movement is limited to revolving around the axis of rotation, and wobbling may be minimized. A third effect of the bearing is that it facilitates easy positing of the rotatable tube rack holder. A fourth effect of the bearing is that it facilitates maintenance free operation - for example, it may not be required to use oil to make the rotatable tube rack holder rotate smoothly. Other effects of the bearing are that it facilitates smooth rotation of the rotatable tube rack holder, thereby for example facilitating low force to rotate the rotatable tube rack holder, robustness, noiseless movement, and tolerance to cold and/or heat. An effect of the stopping means is that a tube rack can be placed and/or locked in said rotatable tube rack holder when the rotatable tube rack holder is stopped. Another effect of the stopping means is that the rotatable tube rack holder can be restricted from moving by an object getting in contact with the rotatable tube rack holder, for example a finger, such the stopping means provides a safety feature.

Further, the present disclosure relates to a tube rack for holding a plurality of tubes, comprising: a base unit comprising a bottom having a plates and configured for being placed in a rotatable tube rack holder and/or one or more centrifuge(s); and a plurality of indentions in the base unit, each indention configured for holding a tube, wherein each indention comprises a cylindrical top section and a conical bottom section, the conical bottom section having an opening angle between 16 and 20 degrees, such as between 17 degrees and 20 degrees, such as between 18 degrees and 20 degrees, such as between 19 degrees and 20 degrees , such as between 17 degrees and 19 degrees, such as between 18 degrees and 19 degrees, and/or such as 18.5 degrees.

An effect of this is that a series of different tubes, varying in volume such as between 1.5 mL and 1.7 mL, and with a lower conical part that varies in opening angle from 16 to 19 degrees can fit into said indentions, such that an end of said different tubes abutting the rack are positioned at the same height. Furthermore, the described tubes may also vary with respect to bottom end curvature from 2 mm to 3.5 mm and with respect to end depth from 1.7 mm to 2.2 mm. The conical bottom section may further facilitate tight placement of the tubes such that the tubes are kept in place rather than rattling around as is the case for tubes being placed in most tube racks. Furthermore, the tight-fitting conical part may ensure maximal thermal contact between rack and the tubes. Even further, the tight-fitting conical part may for instance permit biological samples to be cooled or heated swiftly when positioned in the rack, or be kept at a temperature identical to the rack temperature.

Even further, the present disclosure relates to a rotator system, comprising: a rotatable tube rack holder as previously described; and a tube rack rotator device as previously described.

Even more further, the present disclosure relates to a rotator kit, comprising: a rotatable tube rack holder as previously described; and a tube rack rotator device as previously described.

According to the present disclosure, the rotatable tube rack holder for a laboratory sample inversion device includes three or four plates extending radially from the axis of rotation. One or more compartments located on these surfaces allow secure attachment of laboratory tube racks, each tube rack holding a plurality of test tubes with a sample. Rotation by a motor unit permits agitation of the samples, for instance biological material as a step in diagnostic or experimental procedures. Compartments are configured to allow top-down loading of tube racks, which are held in place by the confinements of the compartment as well as a one-hand operated locking mechanism. The racks holding pluralities of test tubes conform to industry category standards allowing direct transfer of racks to ensuing work flow steps, for instance centrifugation. The rotatable tube rack holder increases the number of samples that can be agitated in parallel while reducing the time and effort required for loading and unloading racks to the tube rack compartments.

### Description of drawings

**Fig. 1** shows an example of a rotatable tube rack holder for a tube rack rotator device according to the present disclosure from a side view.
**Fig. 2** shows another example of a rotatable tube rack holder for a tube rack rotator device according to the present disclosure from a first perspective.
**Fig. 3** shows another example of a rotatable tube rack holder for a tube rack rotator device according to the present disclosure from a second perspective.
**Fig. 4** shows another example of a rotatable tube rack holder for a tube rack rotator device according to the present disclosure from a top view.
**Fig. 5** shows an example of a rotator system according to the present disclosure from a perspective.
**Fig. 6** shows a photo of an embodiment of the rotator system according to the present disclosure.
**Fig. 7** shows an example of a stopping means according to the present disclosure from a perspective.
**Fig. 8** shows an example of a stopping means according to the present disclosure from a perspective.
**Fig. 9** shows an example of a stopping means according to the present disclosure from a perspective.
**Fig. 10** shows an example of another stopping means according to the present disclosure from a perspective.
**Fig. 11** shows an example of a tube rack rotator device according to the present disclosure from a perspective.
**Fig. 12** shows an example of a tube rack according to the present disclosure from a perspective.
**Fig. 13** shows an example of a tube rack according to the present disclosure from a perspective.
**Fig. 14** shows an example of a tube rack according to the present disclosure from a side view.
**Fig. 15** shows an example of a tube rack according to the present disclosure from a top view.
**Fig. 16** shows an example of an indention in a tube rack according to the present disclosure from a side view.

### Detailed description of the invention

The present invention is as defined in the claims.

### Plate(s)

As previously described, the present disclosure relates to a rotatable tube rack holder for a tube rack rotator device, comprising one or more plate(s) extending radially from an axis of rotation.

In one embodiment of the present disclosure, said plate comprises a single plate. A configuration where the plate comprises a single plate is the simplest construction of the present disclosure. However, such a construction may still facilitate the rotation of a plurality of tube racks. One or more compartments for holding the plurality of tube racks may for example be located on the same side or on both sides of the single plate. Preferably, the single plate may have its axis of rotation along the middle of the plate, but alternatively it could have its axis of rotation along a line away from the middle of the plate.

In another embodiment of the present disclosure, said plates comprise a one-piece structure having three radially extending plates.

In yet another embodiment of the present disclosure, said said plates comprise a one-piece structure having four radially extending plates.

In a further embodiment of the present disclosure, said plates comprise three plates. A first plate may have an area of approximately the sum of the two other plates, for example such that the two other plates have an area of approximately half of the first plate. In this way, it may be possible to connect the two other plates on each side of the first plates, with their planes perpendicular to the plane of the first plate, thereby obtaining four radial extending plates, for example with the same area. All the plates may also be identical and connected to each other such that the three plates form three radially extending plates.

In yet further embodiments of the present disclosure, said plates comprise four plates forming four radially extending plates. The four plates may for example be identical and connected to each other.

Various configurations of the plates may be possible. As illustrated, it may be possible to connect the three plates to form three radially extending plates, but it may also be possible to connect the three plates to form four radially extending plates. Using a large number of plates may facilitate a large number of radially extending plates. The plates may be made of plastic such as for example acrylate polymer. The one or more compartments for holding the plurality of tube racks may be located on both sides of the plate(s).

In another preferred embodiment of the present disclosure, the plate(s) has/have a length along said axis of rotation of less than 55 cm, such as less than 50 cm, such as less than 45 cm, such as less than 40 cm, such as less than 35 cm, such as less than 30 cm, such as less than 25 cm, such as less than 20 or such as less than 15 cm. An effect of having a length along said axis of rotation of the complete rotator system at least less than 55 cm is that the rotator and plate may be possible to insert in a refrigerator or laboratory oven, such that for example the tube racks and the tubes can be kept at a constant desired low or high temperature. However, in some embodiments, the length along said axis of rotation is less than 100 cm.

In one embodiment of the present disclosure, the compartment(s) comprises one or more wall(s). These walls may for example be attached to the plate(s) by glue or other adhesive. The compartments may be made of plastic such as for example acrylate polymer.

Preferably, the wall(s) comprise(s) a part of said plates. It may for example be possible to have a number of walls attached to a first plate and a second plate attached with its plane perpendicular to the first plate, such that the second plate forms a wall.

In one embodiment, the locking mechanism is configured for enclosing the tube rack(s) and said tubes in said compartment(s). The enclosing may enclose the tube rack(s) fully or partly.

As just described, the plate(s) may be attached to each other to form the radial extending plates. In this way, it may be possible to design and/or manufacture a rotatable tube rack holder for a tube rack rotator device without a shaft. Thus the present disclosure provides a device with low production cost in that only plates may be needed to form a rotatable tube rack holder for a tube rack rotator device.

### Locking mechanism

In a preferred embodiment of the present disclosure, the locking mechanism for each compartment having a first position for allowing placement of said tube rack into said compartment and a second position for restricting said tubes from moving in a direction perpendicular to said plate. The first and second positions may be open and closed. Further, the first and second positions may be locked and unlocked. For example, the locking mechanism may be mechanically operated. The locking mechanism may be a lid and/or a lid lock, such that the lid can be opened and closed. The lid lock may be locked or unlocked, for example when the lid is closed. The locking mechanism may be a hook-and-eye or may be a spring-loaded hook-and-eye. The locking mechanism may also be magnetically operated. The locking mechanism may be connected or unconnected. For example, the locking mechanism may be a magnet, for example attached to a lid, such that in the first position the magnet is unconnected from the plates and in the second position the magnet is connected to the plates. The first position may be on and off. For example, the locking mechanism may be electronically or electro-magnetically operated. The locking mechanism may be an electromagnetic lock, for example the locking mechanism may be an electromagnet, for example attached to a lid or the plate(s), such that in the first position the electromagnet is off and in the second position the magnet is on. The electromagnet may lock a lid to the plate(s) or the electromagnet may lock the tube rack to the plate(s).

As described, the locking mechanism may comprise a lid. Preferably, the lid is connected to the plate(s). More preferably, when there are more than two plates, such as three or four plates, the lid is connected to one of the plates and locked to another of the plates, for example by the lid being bended. In one embodiment of the present disclosure, the lid comprises a spring loaded hinge. In another embodiment of the present disclosure, the lid comprises a spring loaded lock, e.g. as a hook-and-eye. The spring loaded hinge and/or spring loaded lock may facilitate easy operation of the lid. In one embodiment, the lid may thus be opened by pressing the lid. In another embodiment, the lid may be opened by pushing or pulling the lever on the spring-loaded lock. Thus, the spring loaded hinge and/or spring loaded lock may further facilitate one-hand operation of the lid.

In a preferred embodiment of the present disclosure, the lid is configured for press fitting said tubes into said tube rack(s) while being closed. Since the tubes are restricted from moving in a direction perpendicular to said plate by the locking means according to the present disclosure, the locking mechanism may be configured particularly such that press fitting the tubes into the tube rack(s) is possible. For example, a lid may restrict the tubes from moving in a direction perpendicular to said plate, and thereby being able to apply a pressure in a direction perpendicular to said plate such that the tubes are press fit into the tube rack(s). Thus, the present disclosure provides a solution to easily fitting, in particular press fitting, tubes into a tube rack.

### Stabilizing means

As previously described, it may be possible to design and/or manufacture a rotatable tube rack holder for a tube rack rotator device without a shaft. A shaft typically provides some stability, but this can be achieved using stabilizing means as disclosed herein.

In a preferred embodiment of the present disclosure, the rotatable tube rack holder further comprises a first stabilizing means and a second stabilizing means configured to stabilize said plate(s). The first stabilizing means may be attached to a first end of said plate(s) along said axis of rotation and wherein said second stabilizing means is attached to an opposite end of said plate(s) along said axis of rotation.

Preferably, the first stabilizing means comprises a first attachment means configured to mount to a first mounting means in said tube rack rotator device.

More preferably, the second stabilizing means comprises a second attachment means configured to mount to a second mounting means in said tube rack rotator device. Two stabilizing means may provide a more stable configuration that just one stabilizing means.

### Stopping means on the tube rack rotator device

In one embodiment of the present disclosure, the stopping means comprises one or more protrusions configured to engage with a part of said rotatable tube rack holder from a direction perpendicular to said axis of rotation, thereby restricting said rotatable tube rack holder from rotating.

In another embodiment of the present disclosure, the stopping means comprises means for engaging and/or disengaging said stopping means, may be mechanical means such as for example a button or a knob. The means for engaging and/or disengaging said stopping means may be electronic and/or digital means, for example a touch display.

In a preferred embodiment of the present disclosure, the stopping means comprises a clutch to allow said drive to rotate while said rotatable tube rack holder is being restricted from rotating. For example, one or more protrusions configured to engage with a part of said rotatable tube rack holder from a direction perpendicular to said axis of rotation, may be restricting said rotatable tube rack holder from rotating, while the drive still rotates. Alternatively, a person or a part of a person, such as a hand or a finger, even hair, may be restricting said rotatable tube rack holder from rotating, while the drive still rotates. In this way, the clutch may facilitate a safety feature.

### Dimensions of the tube rack rotator device

In one embodiment of the present disclosure, the rotator device has a total length along said axis of rotation of less than 58 cm, such as less than 53 cm, such as less than 48 cm, such as less than 43 cm, such as less than 38 cm, such as less than 33 cm, such as less than 28 cm, such as less than 23 or such as less than 18 cm. An effect of having a length as just described is that the device may be possible to insert in a refrigerator or oven, such that for example the tube racks and the tubes can be kept at a constant desired low or high temperature. However, in some embodiments, the total length along said axis of rotation of the device is less than 100 cm.

### Tube rack and tubes

As previously described, the present disclosure relates to a tube rack comprising a plurality of indentions with a conical bottom section, wherein the conical bottom section is with an opening angle between 16 and 20 degrees. The conical bottom section may be rounded with a radius of curvature between 1 mm and 5mm, such as between 2 mm and 4 mm, such as 3 mm. Thus the conical bottom section may comprise a geometrical apex point, A, which is not located inside the indention, but rather located in the base unit or outside the base unit. If two diametrical points on the conical bottom section are called *B* and *C,* then the angle *∠BAC* is the opening angle. The two point *B and C* may be coinciding with the cylindrical top section, and thus defining the diameter of the indention.

In a preferred embodiment of the present disclosure, the opening angle is selected such that a series of different tubes having a volume between 1.5 mL and 1.7 mL can fit into said indentions such that said series of different tubes held in said indentions abut said cylindrical top section with the same height. The series of different tubes may further have a cross sectional diameter that varies with up to 2 mm and/or such as up 1 mm.

In a more preferred embodiment of the present disclosure, the cylindrical top section has a diameter of approximately 10.9 mm. Most preferably, the indentions are 48 indentions in an array formed by 6 by 8.

The tubes may be configured for holding a volume between 1.5 mL and 1.7 mL. There are various tubes on the market holding a volume between 1.5 mL and 1.7mL. Examples are: Eppendorf tubes (cat# 0030125.150, 0030108.051 and/or 0030120.086), Biozym tubes (cat# 710176), Corning Costar tubes (cat #3620), Santa Cruz tubes (cat# sc-200271), Life Technologies/Ambion tubes (cat# AM12400), Starlab tubes (cat# E1415-1500), Simport tubes (cat# SIMPT330-7LST, or Fisherbrand tubes (cat# 05-408-129). The described micro centrifuge tubes have an upper near-cylindrical part and a lower conical part with a total length between 40.30 to 41.00 mm. The conical part varies in opening angle from 16 to 19 degrees and has a rounded bottom that varies in curvature from R2 to R3.5 whilst the bottom end depth varies from 1.7 to 2.2 mm.

The tube rack as disclosed herein may specifically be configured for holding tubes holding a volume between 1.5 mL and 1.7 mL, in particular all the above described tubes. In other words, by having the tube rack as disclosed herein, it is possible to use a variety of tubes having a volume between 1.5 mL and 1.7 mL. Further, by having the tube rack as disclosed herein, it is configured such that the total height of the tube rack and inserted tubes, with the various tubes having a volume between 1.5 mL and 1.7 mL placed in the tube rack, is within a minimum of 42.5 mm and a maximum of 43.6 mm. In other words, when the various tubes are placed in the tube tack, the total rack and tube height is always within a defined range. This ensures that the tube rack with the various tubes placed therein can be placed in the rotatable tube rack holder without height adjustments of the compartment, for example by adjustment of the placement of the lid.

In a preferred embodiment of the present disclosure, the length of said base unit is between 100 mm and 150 mm, such as between 110 mm and 140 mm, and/or such as between 120 mm and 130 mm, and/or such as between 127 mm and 128 mm, and/or such as 127.48 mm.

In another preferred embodiment of the present disclosure, the width of said base unit is between 70 mm and 100 mm, such as between 80 mm and 90 mm, and/or such as 84.98 mm.

In yet another preferred embodiment of the present disclosure, the height of said base unit is between 30 mm and 36 mm, such as between 31 mm and 35 mm, and/or such as between 32 mm and 34 mm, and/or such as 33 mm.

These dimensions are such that the tube rack fits within a series of centrifuges adapted to centrifuge micro plates with tubes such that the dimensions conform to industry footprint standards for micro plates: American national Standards Institute, ANSI/SLAS 1-2004.

In order to have the tube racks to fit within a wide range of centrifuges, the base unit may comprise rounded corners with a radius of curvature of 4 mm.

Preferably, the base unit may comprise one or more gripping means for carrying and/or handling said tube rack. The gripping means may be one or more grooves.

In one embodiment of the present disclosure, the base unit is made of a material with a heat conductance between 50 W/M/ °C and 500 W/M/ °C. In this way, samples and/or tubes may be kept at a constant temperature during a longer work process. Within the heat conductance range is included silver: 427 W/M/ °C, aluminum: 237 W/M/ °C and cast iron: 55 W/M/ °C.

In a preferred embodiment of the present disclosure, the base unit has a weight of less than 350 g, such as less than 330 g, such as less than 310 g, such as less than 290 g, such as less than 270 g, such as less than 250 g, such as less than 230 g, such as less than 210 g, such as less than 190 g, such as less than 170 g, such as less than 150 g, such as less than 130 g, such as less than 110 g, such as less than 90 g, such as less than 70 g or such as less than 50 g.

### Rotator system and rotator kit

According to the present disclosure, there is disclosed a rotator system comprising a rotatable tube rack holder and a rotator device. The rotator system may further comprise one or more of the described feature(s). The rotator system may be an assembled system.

According to the present disclosure, there is also disclosed a rotator kit, comprising a rotatable tube rack holder and a rotator device. The rotator kit may further comprise one or more of the described feature(s). The rotator kit may even further comprise a tube rack as previously described. The rotator kit may be an assembled or an unassembled system.

### Example 1

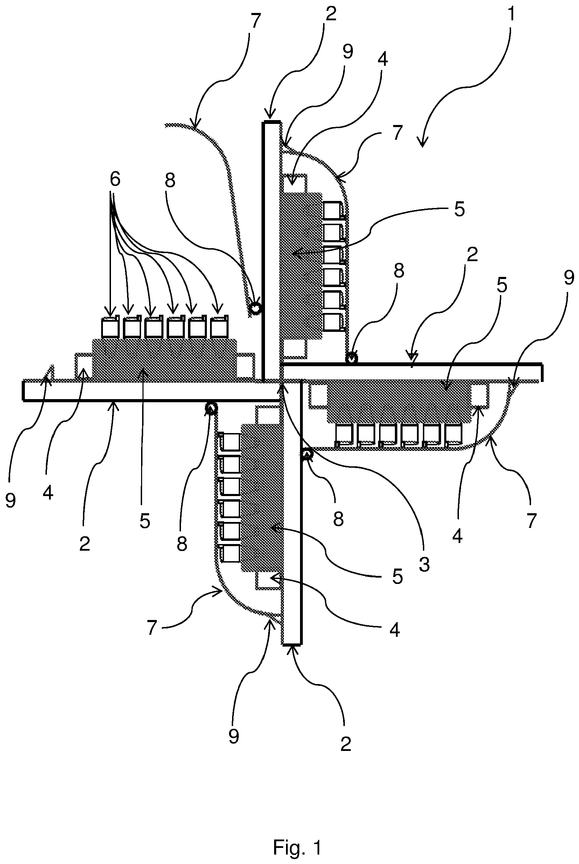

**Fig. 1** shows an example of a rotatable tube rack holder for a tube rack rotator device according to the present disclosure from a side view. The rotatable tube rack holder for a tube rack rotator device **1** comprises: four plates **2** extending radially from an axis of rotation **3;** four compartments **4** for tightly holding one or more tube rack(s) **5,** each tube rack configured to hold a plurality of tubes **6,** wherein said compartments **4** are attached to one side of said plates **2** and configured such that said one or more tube rack(s) **5** can be placed inside said compartments **4** from a direction substantially perpendicular to said plate **2;** and a locking mechanism **7** for each of said compartments **4** and configured such that when said tube rack(s) **5** holding a plurality of said tubes **6** is/are placed inside said compartment **4,** said tubes **6** are restricted from moving in a direction perpendicular to said plate **2.** In this example, the plates **2** comprise four plates forming four radially extending plates. The compartments **4** are in this case made of one or more wall(s). The locking mechanism **7** is configured for enclosing the tube rack(s) and said tubes in said compartments. It can be seen that the locking mechanism **7** for each compartment **4** having a first position for allowing placement of said tube rack into said compartment and a second position for restricting said tubes from moving in a direction perpendicular to said plate. In this case the locking mechanism **7** is a lid which can be opened and closed. When opened, the locking mechanism is in its first position and when closed, the locking mechanism is in its second position. In this example, the locking mechanism comprises a lid with a spring loaded hinge **8** and a spring loaded lock **9.** It can be seen that the lid **7** is configured for press fitting said tubes **6** into said tube rack(s) **5** since the lid is able to apply pressure onto the tubes **6** when being closed.

### Example 2

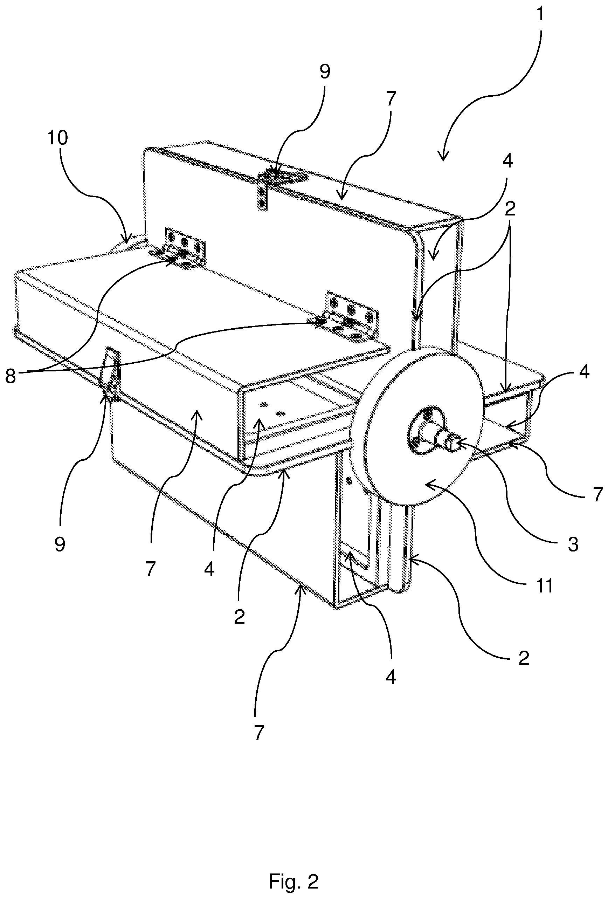

**Fig. 2** shows another example of a rotatable tube rack holder for a tube rack rotator device according to the present disclosure from a first perspective. The rotatable tube rack holder for a tube rack rotator device **1** comprises: three plates **2** extending radially from an axis of rotation **3;** four compartments **4** for tightly holding one or more tube rack(s), each tube rack configured to hold a plurality of tubes, wherein said compartments **4** are attached to one side of said plates **2** and configured such that said one or more tube rack(s) can be placed inside said compartments **4** from a direction substantially perpendicular to said plate **2;** and a locking mechanism **7** for each of said compartments **4** and configured such that when said tube rack(s) holding a plurality of said tubes is/are placed inside said compartment **4,** said tubes are restricted from moving in a direction perpendicular to said plate **2.** In this example, the plates comprise three plates and the three plates form four radial extensions. One of the plates is double as large as the two other plates which are attached to one of the plates. This is however not visible on the drawing. The locking mechanism **7** is configured for enclosing the tube rack(s) and said tubes in said compartments. It can be seen that the locking mechanism **7** for each compartment **4** having a first position for allowing placement of said tube rack into said compartment and a second position for restricting said tubes from moving in a direction perpendicular to said plate. In this example, the locking mechanism **7** comprises a lid, a spring loaded hinge **8** and a spring loaded lock **9.** The lid **7** is configured for press fitting said tubes into said tube rack(s) since the lid is able to apply pressure onto said tubes when being closed. In this example, the rotatable tube rack holder further comprises a first stabilizing means **10** and a second stabilizing means **11** configured to stabilize said plates **2.** The first stabilizing means **10** is attached to a first end of said plates along said axis of rotation and the second stabilizing means **11** is attached to an opposite end of said plates along said axis of rotation. The first stabilizing means **10** comprises a first attachment means configured to mount to a first mounting means in said tube rack rotator device. The second stabilizing means **11** comprises a second attachment means configured to mount to a second mounting means in said tube rack rotator device. In this example, the second attachment means comprises a rod extending along the axis of rotation **3.** The rod comprises a square part to engage with a stopping means on the rotator device.

### Example 3

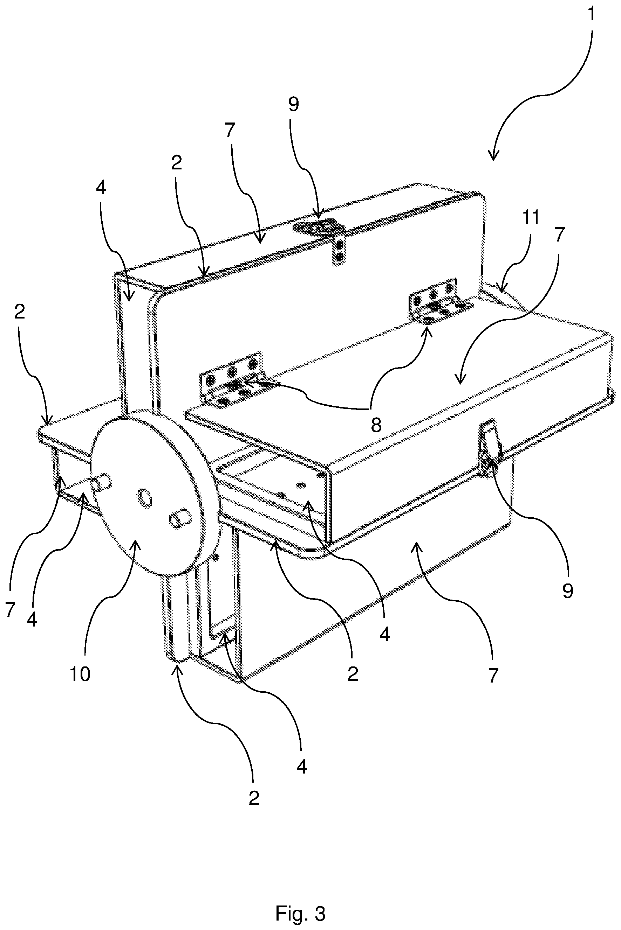

**Fig. 3** shows another example of a rotatable tube rack holder for a tube rack rotator device according to the present disclosure from a second perspective. The rotatable tube rack holder for a tube rack rotator device **1** comprises: three plates **2** extending radially from an axis of rotation **3;** four compartments **4** for tightly holding one or more tube rack(s), each tube rack configured to hold a plurality of tubes, wherein said compartments **4** are attached to one side of said plates **2** and configured such that said one or more tube rack(s) can be placed inside said compartments **4** from a direction substantially perpendicular to said plate **2;** and a locking mechanism **7** for each of said compartments **4** and configured such that when said tube rack(s) holding a plurality of said tubes is/are placed inside said compartment **4,** said tubes are restricted from moving in a direction perpendicular to said plate **2.** In this example, the plates comprise three plates and the three plates form four radial extensions. One of the plates is double as large as the two other plates which are attached to one of the plates. This is however not visible on the drawing. The locking mechanism **7** is configured for enclosing the tube rack(s) and said tubes in said compartment(s). It can be seen that the locking mechanism **7** for each compartments **4** having a first position for allowing placement of said tube rack into said compartment and a second position for restricting said tubes from moving in a direction perpendicular to said plate. In this example, the locking mechanism **7** comprises a lid, a spring loaded hinge **8** and a spring loaded lock **9.** The lid **7** is configured for press fitting said tubes into said tube rack(s) since the lid is able to apply pressure onto said tubes when being closed. In this example, the rotatable tube rack holder further comprises a first stabilizing means **10** and a second stabilizing means **11** configured to stabilize said plates **2.** The first stabilizing means **10** is attached to a first end of said plates along said axis of rotation and the second stabilizing means **11** is attached to an opposite end of said plates along said axis of rotation. The first stabilizing means **10** comprises a first attachment means configured to mount to a first mounting means in said tube rack rotator device. The second stabilizing means **11** comprises a second attachment means configured to mount to a second mounting means in said tube rack rotator device. In this example, the first attachment means comprises two protrusions, separated by a distance from the axis of rotation. The two protrusions are configured to mount to a first mounting means on the tube rack rotator device, for example two holes for the two protrusions.

### Example 4

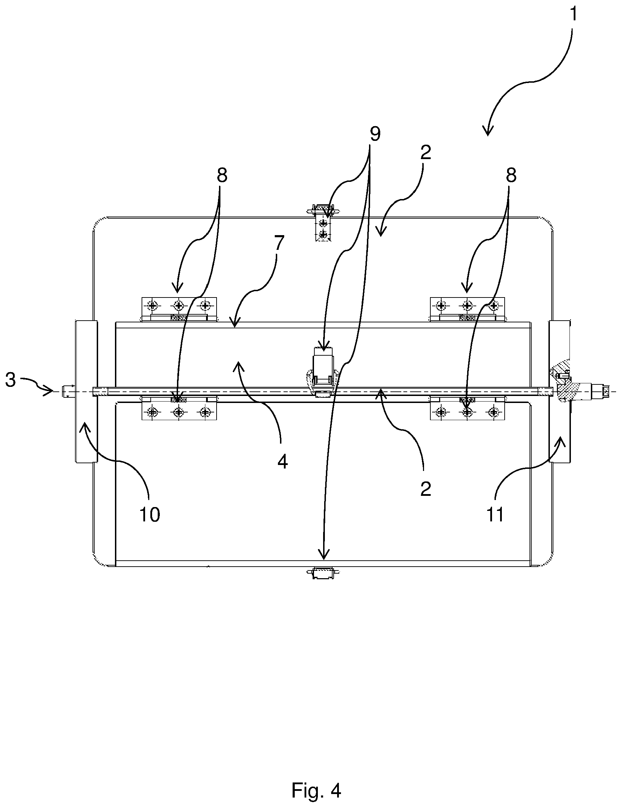

**Fig. 4** shows another example of a rotatable tube rack holder for a tube rack rotator device according to the present disclosure from a top view. The rotatable tube rack holder for a tube rack rotator device **1** comprises: three plates **2** extending radially from an axis of rotation **3;** four compartments **4** for tightly holding one or more tube rack(s), each tube rack configured to hold a plurality of tubes, wherein said compartments **4** are attached to one side of said plates **2** and configured such that said one or more tube rack(s) can be placed inside said compartments **4** from a direction substantially perpendicular to said plate **2;** and a locking mechanism **7** for each of said compartments **4** and configured such that when said tube rack(s) holding a plurality of said tubes is/are placed inside said compartment **4,** said tubes are restricted from moving in a direction perpendicular to said plate **2.** In this example, the plates comprise three plates and the three plates form four radial extensions. One of the plates is double as large as the two other plates which are attached to one of the plates. This is however not visible on the drawing. The locking mechanism **7** is configured for enclosing the tube rack(s) and said tubes in said compartment(s). It can be seen that the locking mechanism **7** for each compartment **4** having a first position for allowing placement of said tube rack into said compartment and a second position for restricting said tubes from moving in a direction perpendicular to said plate. In this example, the locking mechanism **7** comprises a lid, a spring loaded hinge **8** and a spring loaded lock **9.** The lid **7** is configured for press fitting said tubes into said tube rack(s) since the lid is able to apply pressure onto said tubes when being closed. In this example, the rotatable tube rack holder further comprises a first stabilizing means **10** and a second stabilizing means **11** configured to stabilize said plates **2.** The first stabilizing means **10** is attached to a first end of said plates along said axis of rotation and the second stabilizing means **11** is attached to an opposite end of said plates along said axis of rotation. The first stabilizing means **10** comprises a first attachment means configured to mount to a first mounting means in said tube rack rotator device. The second stabilizing means **11** comprises a second attachment means configured to mount to a second mounting means in said tube rack rotator device.

### Example 5

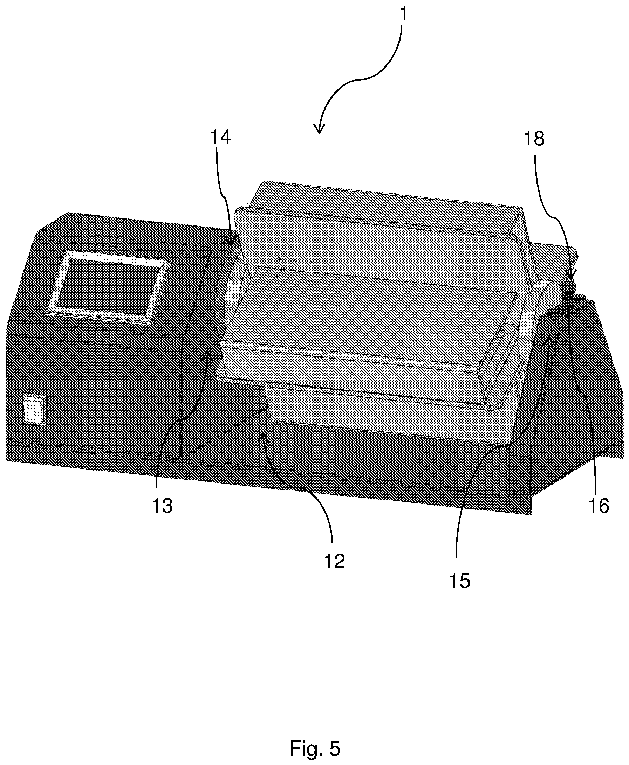

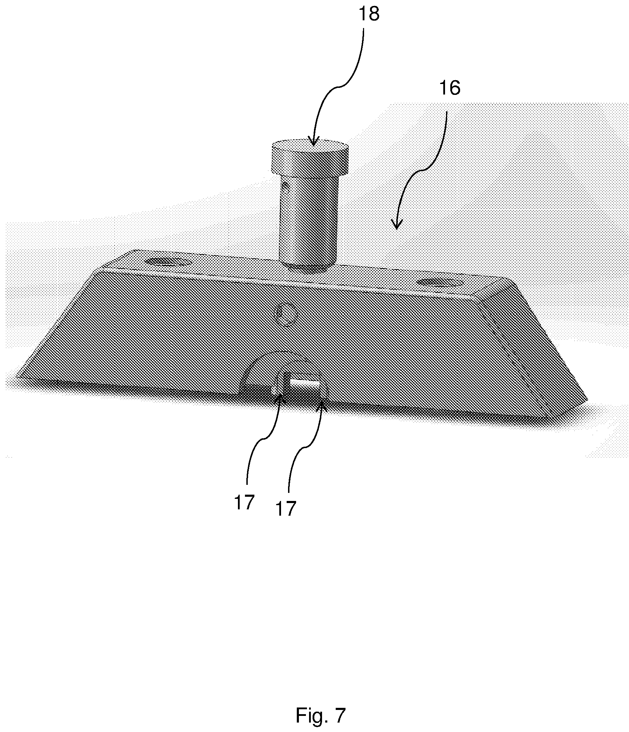

**Fig. 5** shows an example of a rotator system according to the present disclosure from a perspective. The rotator system comprises a rotatable tube rack holder **1** and a tube rack rotator device **12.** The tube rack rotator device is for rotating the rotatable tube rack holder, and comprising: a drive **13** (not visible on this drawing) configured for rotating said rotatable tube rack holder **1** around an axis of rotation; a first mounting means **14** configured for being mounted with said rotatable tube rack holder **1;** a second mounting means **15** (not visible on this drawing) comprising a bearing and located a distance along said axis of rotation such that said rotatable tube rack holder is able to be mounted between said first mounting means and said second mounting means; and stopping means **16** (parts not visible on this drawing but on **Fig. 7-10**) configured such that said rotatable tube rack holder is able to be prevented from rotating. The stopping means **16** comprises means for engaging and/or disengaging **18** said stopping means **16.** In this example, this means for engaging and/or disengaging **18** said stopping means **16** is a button.

### Example 6

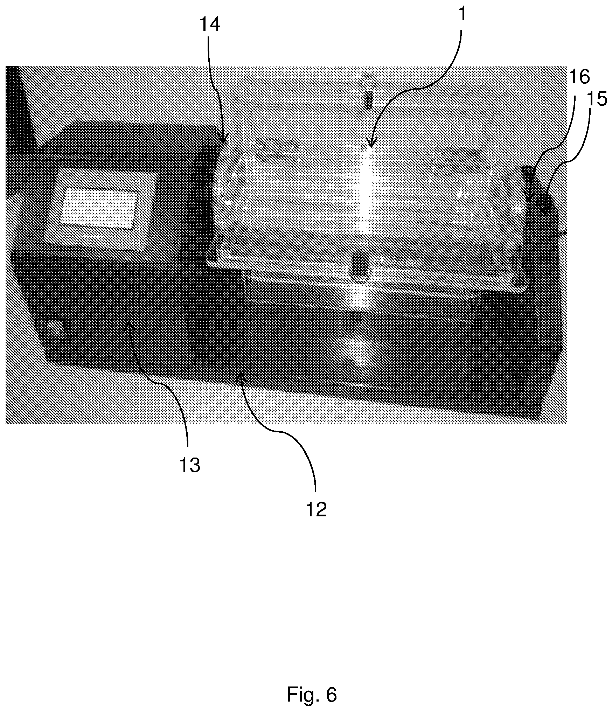

**Fig. 6** shows a photo of a rotator system according to the present disclosure. The rotator system comprises a rotatable tube rack holder **1** and a tube rack rotator device **12.** The tube rack rotator device is for rotating the rotatable tube rack holder, and comprising: a drive **13** (not visible on this photo) configured for rotating said rotatable tube rack holder **1** around an axis of rotation; a first mounting means **14** configured for being mounted with said rotatable tube rack holder **1;** a second mounting means **15** (not visible on this photo) comprising a bearing and located a distance along said axis of rotation such that said rotatable tube rack holder is able to be mounted between said first mounting means and said second mounting means; and stopping means **16** (not visible on this photo) configured such that said rotatable tube rack holder is able to be prevented from rotating.

### Example 7

**Fig. 7** shows an example of a stopping means **16** according to the present disclosure from a perspective. The stopping means **16** comprises two protrusions **17** configured to engage with a part of said rotatable tube rack holder from a direction perpendicular to said axis of rotation, thereby restricting said rotatable tube rack holder from rotating. For example, the part of said rotatable tube rack holder may be a rod, for example on the stabilizing means, comprising a square part to engage with the stopping means **16,** such that the two protrusions **17** are able to be in contact with two opposite sides of the square part on the rod. Furthermore, the stopping means **16** comprises means for engaging and/or disengaging **18** said stopping means **16.** In this example, this means for engaging and/or disengaging **18** said stopping means **16** is a button.

### Example 8

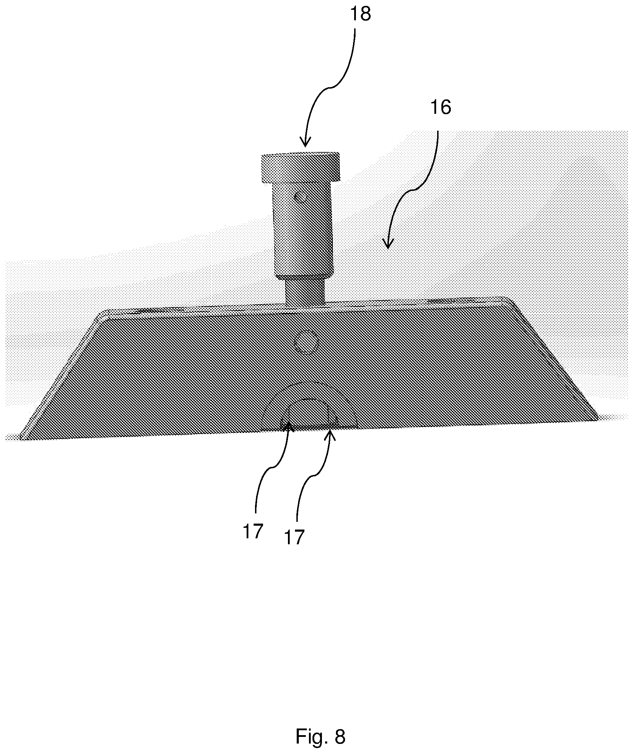

**Fig. 8** shows an example of a stopping means **16** according to the present disclosure from a perspective. The stopping means **16** comprises two protrusions **17** configured to engage with a part of said rotatable tube rack holder from a direction perpendicular to said axis of rotation, thereby restricting said rotatable tube rack holder from rotating. For example, the part of said rotatable tube rack holder may be a rod, for example on the stabilizing means **16,** comprising a square part to engage with the stopping means **16,** such that the two protrusions **17** are able to be in contact with two opposite sides of the square part on the rod. Furthermore, the stopping means **16** comprises means for engaging and/or disengaging **18** said stopping means **16.** In this example, the means for engaging and/or disengaging **18** said stopping means **16** is a button.

### Example 9

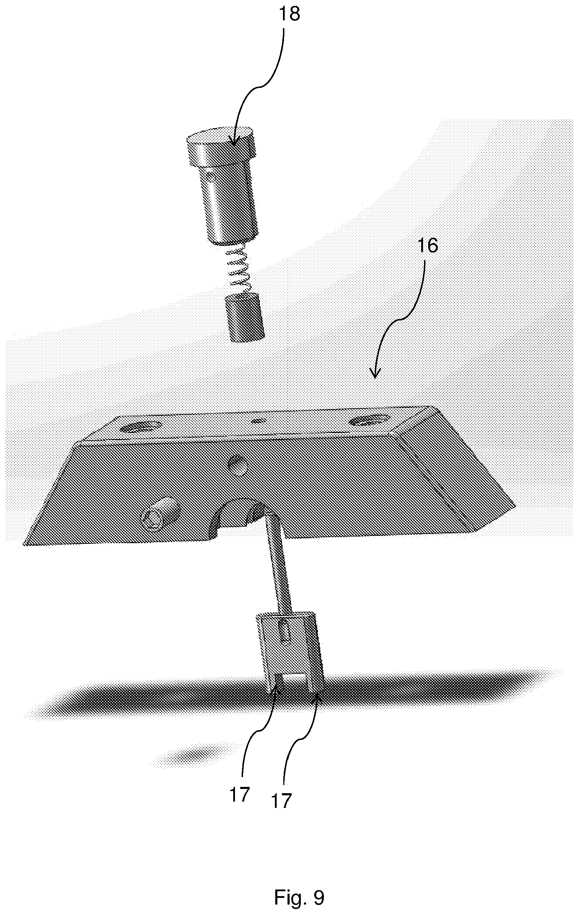

**Fig. 9** shows an example of a stopping means **16** according to the present disclosure from a perspective. The stopping means **16** comprises two protrusions **17** configured to engage with a part of said rotatable tube rack holder from a direction perpendicular to said axis of rotation, thereby restricting said rotatable tube rack holder from rotating. For example, the part of said rotatable tube rack holder may be a rod, for example on the stabilizing means, comprising a square part to engage with the stopping means **16,** such that the two protrusions **17** are able to be in contact with two opposite sides of the square part on the rod. Furthermore, the stopping means **16** comprises means for engaging and/or disengaging **18** said stopping means **16.** In this example, the means for engaging and/or disengaging **18** said stopping means **16** is a button. The stopping means **16** comprises a spring in order to engage and/or disengage the stopping means **16.**

### Example 10

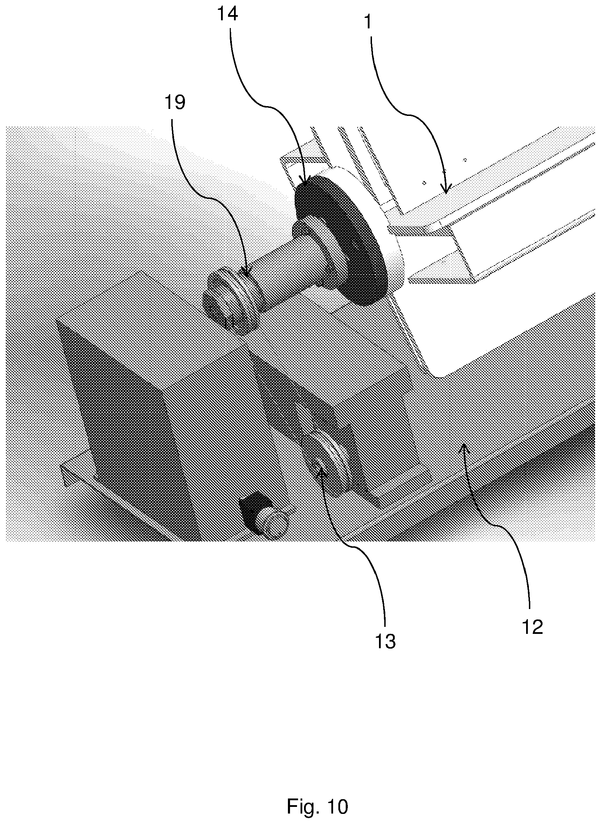

**Fig. 10** shows an example of another stopping means **16** according to the present disclosure from a perspective. In this example, the stopping means **16** comprises a clutch **19** to allow said drive **13** to rotate while said rotatable tube rack holder **1** is being restricted from rotating. Also is shown the mounting means **14** on the tube rack rotator device.

### Example 11

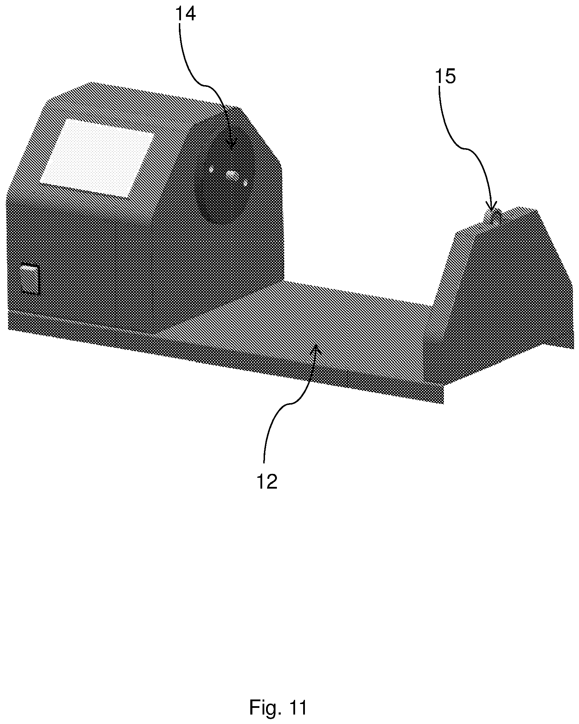

**Fig. 11** shows an example of a tube rack rotator device **12** according to the present disclosure from a perspective. The tube rack rotator device comprises: a drive **13** (not visible on this drawing) configured for rotating said rotatable tube rack holder around an axis of rotation; a first mounting means **14** configured for being mounted with said rotatable tube rack holder;
a second mounting means **15** comprising a bearing and located a distance along said axis of rotation such that said rotatable tube rack holder is able to be mounted between said first mounting means and said second mounting means; and stopping means (here removed to show the second mounting means, but visible on **Fig. 5** and **Fig. 7****-9**) configured such that said rotatable tube rack holder is able to be prevented from rotating. The first mounting means is here a disc with two holes for the two protrusions in the rotatable tube rack holder. The second mounting means comprises a bearing, here with a hole such that a rod on the rotatable tube rack holder is able to be inserted into the hole.

### Example 12

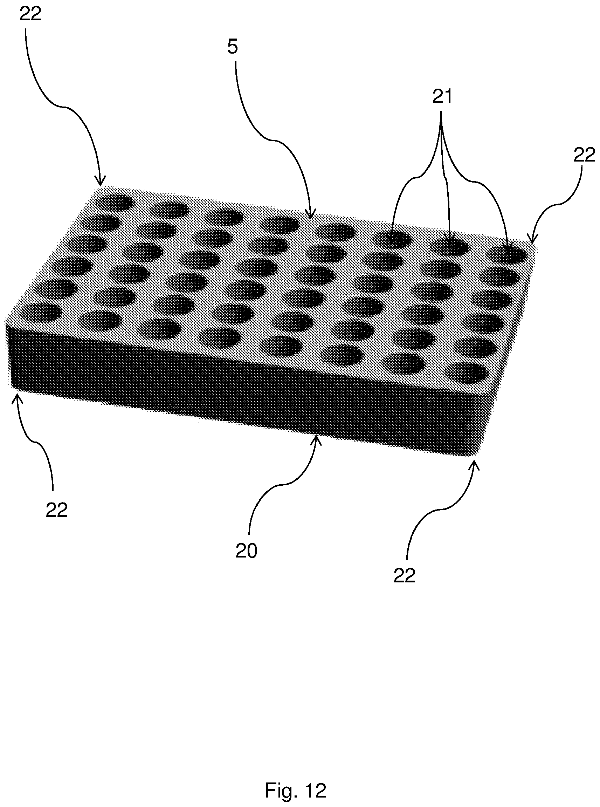

**Fig. 12** shows an example of a tube rack **5** according to the present disclosure from a perspective. The tube rack for holding a plurality of tubes comprises: a base unit **20** comprising a bottom having a plates and configured for being placed in a rotatable tube rack holder and/or one or more centrifuge(s); and a plurality of indentions **21** in the base unit, each indention configured for holding a tube. The indentions **21** are 48 indentions in an array formed by 6 by 8. The base unit comprises rounded corners **22** with a radius of curvature of 4 mm.

### Example 13

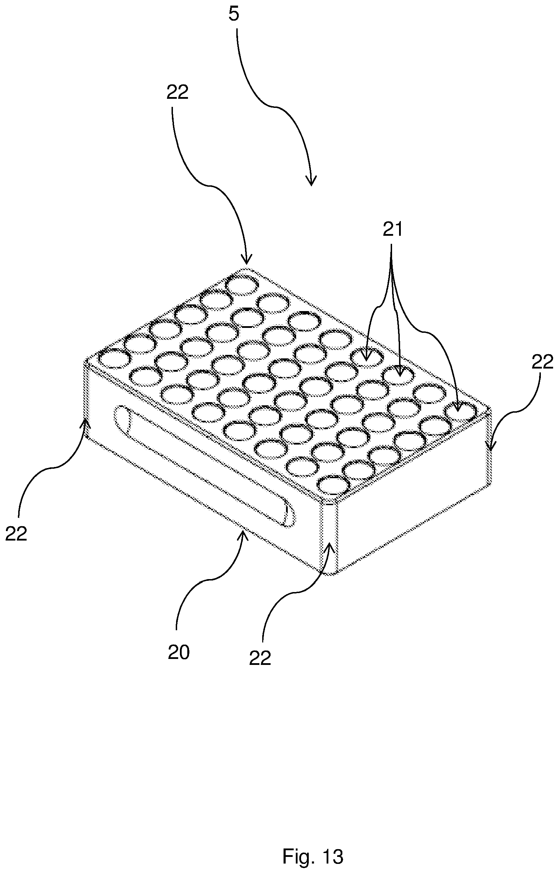

**Fig. 13** shows an example of a tube rack **5** according to the present disclosure from a perspective. The tube rack for holding a plurality of tubes comprises: a base unit **20** comprising a bottom having a plates and configured for being placed in a rotatable tube rack holder and/or one or more centrifuge(s); and a plurality of indentions **21** in the base unit, each indention configured for holding a tube. The indentions **21** are 48 indentions in an array formed by 6 by 8. The base unit comprises rounded corners **22** with a radius of curvature of 4 mm. Furthermore, the base unit comprises two gripping means **23** (only one is visible on the one side) for carrying and/or handling said tube rack.

### Example 14

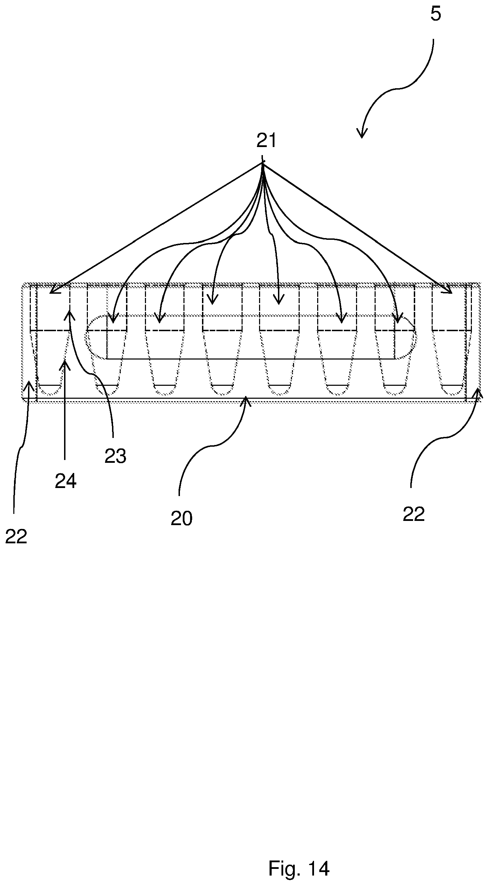

**Fig. 14** shows an example of a tube rack **5** according to the present disclosure from a side view. The tube rack for holding a plurality of tubes comprises: a base unit **20** comprising a bottom having a plates and configured for being placed in a rotatable tube rack holder and/or one or more centrifuge(s); and a plurality of indentions **21** in the base unit, each indention configured for holding a tube, wherein each indention comprises a cylindrical top section **23** and a conical bottom section **24,** the conical bottom section having an opening angle between 16 and 20 degrees, here shown with 18.5 degrees.

### Example 15

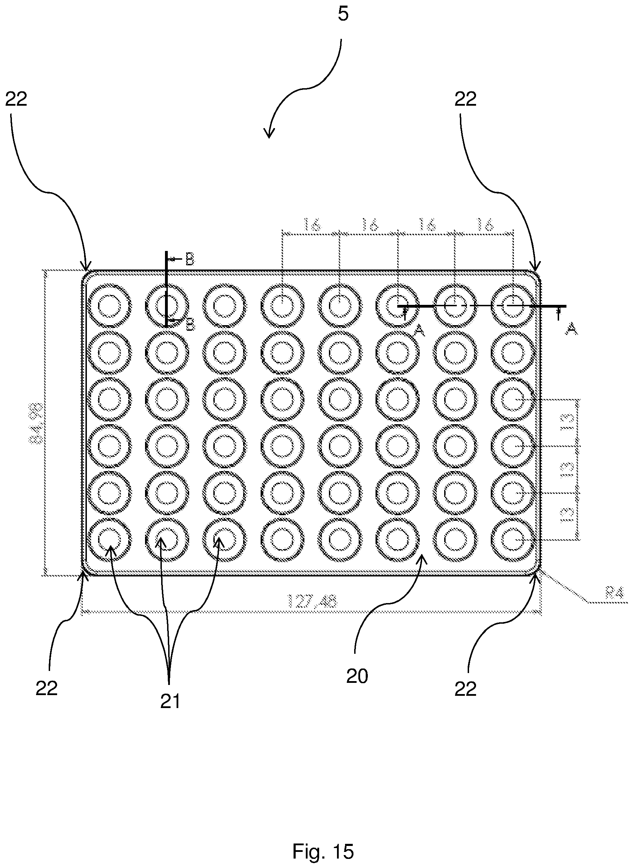

**Fig. 15** shows an example of a tube rack **5** according to the present disclosure from a top view. The length of said base unit is between 100mm and 150 mm, here shown with 127.48 mm. The width of said base unit is between 70 mm and 100 mm, here with 84.98 mm. This example with the given dimensions is made such that this can fit into the rotatable tube rack holder and a series of centrifuges.

### Example 16

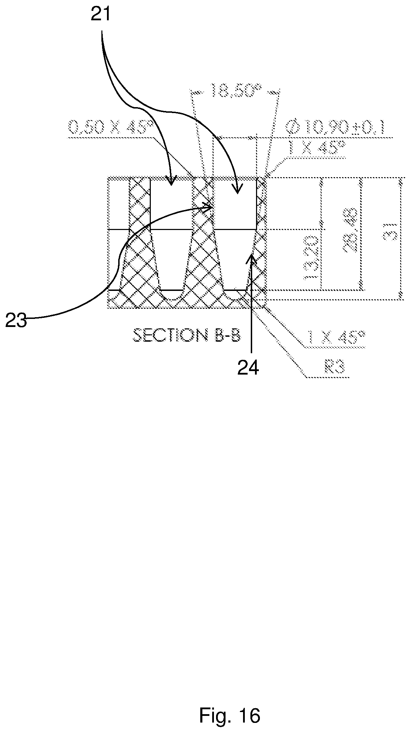

**Fig. 16** shows an example of an indention in a tube rack according to the present disclosure from a side view. The figure shows the section B-B as indicated in **Fig. 14****.** From this view, it can be seen that each indention **21** comprises a cylindrical top section **23** and a conical bottom section **24,** the conical bottom section having an opening angle between 16 and 20 degrees, here shown with 18.5 degrees. From the drawing it can be seen that the diameter of the cylindrical top section is 10.9mm. The indention, comprised by the cylindrical top section and the conical bottom section, is 31 mm in total. The conical bottom section is rounded with a radius of curvature of 3mm.

## Claims

1. A rotatable tube rack holder for a tube rack rotator device (1), comprising:
- three or four plates (2) extending radially from an axis of rotation (3) of the tube rack holder, wherein said plates are connected to each other;
- one or more compartment(s) (4) for tightly holding one or more tube rack(s) (5), each tube rack configured to hold a plurality of tubes (6), wherein said compartment(s) (4) is/are attached to at least one side of said plate(s) (2) and configured such that said one or more tube rack(s) (5) can be placed inside said compartment(s) (4) from a direction perpendicular to said plates (2); and
- a locking mechanism (7) for each of said compartment(s) (4) and configured such that when said tube rack(s) (5) holding a plurality of said tubes (6) is/are placed inside said compartment (4), said tubes (6) are restricted from moving in a direction perpendicular to said plates (2).

2. The rotatable tube rack holder according to claim 1, wherein said three or four plates (2) comprise a one-piece structure.

3. The rotatable tube rack holder according to any of the preceding claims,
wherein said plates (2) has/have a length along said axis of rotation of less than 55 cm, such as less than 50 cm, such as less than 45 cm, such as less than 40 cm, such as less than 35 cm, such as less than 30 cm, such as less than 25 cm, such as less than 20 or such as less than 15 cm.

4. The rotatable tube rack holder according to any of the preceding claims,
wherein said compartment(s) (4) comprises one or more wall(s).

5. The rotatable tube rack holder according to claim 4, wherein said wall(s) comprise(s) a part of said plates.

6. The rotatable tube rack holder according to any of the preceding claims,
wherein said locking mechanism (7) is configured for enclosing the tube rack(s) (5) and said tubes (6) in said compartment(s) (4) and/or wherein said locking mechanism (7) for each compartment having a first position for allowing placement of said tube rack into said compartment and a second position for restricting said tubes from moving in a direction perpendicular to said plate.

7. The rotatable tube rack holder according to any of the preceding claims, wherein said locking mechanism (7) comprises a lid.

8. The rotatable tube rack holder according to claim 7, wherein said lid (7) comprises a spring loaded hinge (8) and/or wherein said lid (7) comprises a spring loaded lock (9) and/or wherein said lid (7) is configured for press fitting said tubes (6) into said tube rack(s) (5) while being closed.

9. The rotatable tube rack holder according to any of the preceding claims, wherein said rotatable tube rack holder further comprises a first stabilizing means (10) and a second stabilizing means (11) configured to stabilize said plate(s).

10. The rotatable tube rack holder according to claim 9, wherein said first stabilizing means (10) is attached to a first end of said plate(s) along said axis of rotation (3) and wherein said second stabilizing means (11) is attached to an opposite end of said plate(s) along said axis of rotation (3) and/or wherein said first stabilizing means (10) comprises a first attachment means configured to mount to a first mounting means in said tube rack rotator device and/or wherein said second stabilizing means (11) comprises a second attachment means configured to mount to a second mounting means in said tube rack rotator device (1).

11. A tube rack rotator device for rotating a rotatable tube rack holder (1) according to claim 1, comprising:
- a drive (13) configured for rotating said rotatable tube rack holder (1) around an axis of rotation;
- a first mounting means (14) configured for being mounted with said rotatable tube rack holder (1);
- a second mounting means (15) comprising a bearing and located a distance along said axis of rotation such that said rotatable tube rack holder is able to be mounted between said first mounting means and said second mounting means; and
- a stopping means (16) configured such that said rotatable tube rack holder is able to be prevented from rotating.

12. The tube rack rotator device according to claim 11, wherein said stopping means (16) comprises one or more protrusions (17) configured to engage with a part of said rotatable tube rack holder from a direction perpendicular to said axis of rotation, thereby restricting said rotatable tube rack holder from rotating.

13. The tube rack rotator device according to claim 11, wherein said stopping means comprises means for engaging and/or disengaging (18) said stopping means (16).

14. The tube rack rotator device according to claim 11, wherein said stopping means (16) comprises a clutch (19) to allow said drive (13) to rotate while said rotatable tube rack holder (1) is being restricted from rotating.

15. The tube rack rotator device according to claim 11, wherein said rotator device has a total length along said axis of rotation of less than 58 cm, such as less than 53 cm, such as less than 48 cm, such as less than 43 cm, such as less than 38 cm, such as less than 33 cm, such as less than 28 cm, such as less than 23, or such as less than 18 cm.

## Patentansprüche

1. Drehbarer Proberöhrchenständerhalter für eine Proberöhrchenständerdrehvorrichtung (1), umfassend:
- drei oder vier Platten (2), die sich radial von einer Drehachse (3) des Proberöhrchenständerhalters aus erstrecken, wobei die Platten miteinander verbunden sind;
- ein Fach oder mehrere Fächer (4), um einen oder mehrere Proberöhrchenständer (5) eng festzuhalten, wobei jeder Proberöhrchenständer konfiguriert ist, um eine Vielzahl von Proberöhrchen (6) zu halten, wobei das Fach/ die Fächer (4) an mindestens einer Seite der Platte(n) (2) befestigt ist/sind und so konfiguriert ist/sind, dass der eine oder die mehreren Proberöhrchenständer (5) in das Fach/die Fächer (4) von einer Richtung aus platziert werden kann/können, die lotrecht zu den Platten (2) ist; und
- einen Verriegelungsmechanismus (7) für jedes Fach/der Fächer (4), der so konfiguriert ist, dass, wenn der/die Proberöhrchenständer (5), der/die eine Vielzahl der Proberöhrchen (6) hält/halten, in das Fach (4) platziert wird/werden, die Proberöhrchen (6) von einer Bewegung in einer Richtung lotrecht zu den Platten (2) abgehalten werden.

2. Drehbarer Proberöhrchenständerhalter nach Anspruch 1, wobei die drei oder vier Platten (2) eine einteilige Struktur umfassen.

3. Drehbarer Proberöhrchenständerhalter nach einem der vorstehenden Ansprüche, wobei die Platten (2) eine Länge entlang der Drehachse von weniger als 55 cm aufweisen, wie etwa weniger als 50 cm, wie etwa weniger als 45 cm, wie etwa weniger als 40 cm, wie etwa weniger als 35 cm, wie etwa weniger als 30 cm, wie etwa weniger als 25 cm, wie etwa weniger als 20 oder wie etwa weniger als 15 cm.

4. Drehbarer Proberöhrchenständerhalter nach einem der vorstehenden Ansprüche, wobei das Fach/die Fächer (4) eine Wand oder mehrere Wände umfasst/umfassen.

5. Drehbarer Proberöhrchenständerhalter nach Anspruch 4, wobei die Wand/Wände einen Teil der Platten umfasst/umfassen.

6. Drehbarer Proberöhrchenständerhalter nach einem der vorstehenden Ansprüche, wobei der Verriegelungsmechanismus (7) konfiguriert ist, um den/die Proberöhrchenständer (5) und die Proberöhrchen (6) in dem Fach/den Fächern (4) zu umschließen, und/oder wobei der Verriegelungsmechanismus (7) für jedes Fach eine erste Position, um das Platzieren des Proberöhrchenständers in das Fach zu ermöglichen, und eine zweite Position aufweist, um die Proberöhrchen davon abzuhalten, sich in einer Richtung lotrecht zur Platte zu bewegen.

7. Drehbarer Proberöhrchenständerhalter nach einem der vorstehenden Ansprüche, wobei der Verriegelungsmechanismus (7) einen Deckel umfasst.

8. Drehbarer Proberöhrchenständerhalter nach Anspruch 7, wobei der Deckel (7) ein gefedertes Scharnier (8) umfasst und/oder wobei der Deckel (7) ein gefedertes Schloss (9) umfasst und/oder wobei der Deckel (7) konfiguriert ist, um die Proberöhrchen (6) in den/die Proberöhrchenständer (5) einzupressen, während er geschlossen wird.

9. Drehbarer Proberöhrchenständerhalter nach einem der vorstehenden Ansprüche, wobei der drehbare Proberöhrchenständerhalter ferner ein erstes Stabilisierungsmittel (10) und ein zweites Stabilisierungsmittel (11) umfasst, die konfiguriert sind, um die Platte(n) zu stabilisieren.

10. Drehbarer Proberöhrchenständerhalter nach Anspruch 9, wobei das erste Stabilisierungsmittel (10) an einem ersten Ende der Platte(n) entlang der Drehachse (3) befestigt ist und wobei das zweite Stabilisierungsmittel (11) an einem entgegengesetzten Ende der Platte(n) entlang der Drehachse (3) befestigt ist und/oder wobei das erste Stabilisierungsmittel (10) ein erstes Befestigungsmittel umfasst, das konfiguriert ist, um an einem ersten Halterungsmittel in der Proberöhrchenständerdrehvorrichtung angebracht zu werden, und/oder wobei das zweite Stabilisierungsmittel (11) ein zweites Befestigungsmittel umfasst, das konfiguriert ist, um an einem zweiten Halterungsmittel in der Proberöhrchenständerdrehvorrichtung (1) angebracht zu werden.

11. Proberöhrchenständerdrehvorrichtung zum Drehen eines drehbaren Proberöhrchenständerhalters (1) nach Anspruch 1, umfassend:
- einen Antrieb (13), der konfiguriert ist, um den drehbaren Proberöhrchenständerhalter (1) um eine Drehachse zu drehen;
- ein erstes Halterungsmittel (14), das zum Anbringen an dem drehbaren Proberöhrchenständerhalter (1) konfiguriert ist;
- ein zweites Halterungsmittel (15), das ein Lager umfasst und in einem Abstand entlang der Drehachse angebracht ist, so dass der drehbare Proberöhrchenständerhalter zwischen dem ersten Halterungsmittel und dem zweiten Halterungsmittel angebracht werden kann; und
- ein Anschlagsmittel (16), das so konfiguriert ist, dass ein Drehen des drehbaren Proberöhrchenständerhalters verhindert werden kann.

12. Proberöhrchenständerdrehvorrichtung nach Anspruch 11, wobei das Anschlagsmittel (16) ein oder mehrere Vorsprünge (17) umfasst, das/die konfiguriert ist/sind, um in einen Teil des drehbaren Proberöhrchenständerhalters von einer Richtung einzugreifen, die lotrecht zur Drehachse ist, und somit den drehbaren Proberöhrchenständerhalter vom Drehen abzuhalten.

13. Proberöhrchenständerdrehvorrichtung nach Anspruch 11, wobei das Anschlagsmittel ein Mittel zum Ineingriffbringen und/oder Lösen (18) des Anschlagsmittels (16) umfasst.

14. Proberöhrchenständerdrehvorrichtung nach Anspruch 11, wobei das Anschlagsmittel (16) eine Kupplung (19) umfasst, um es dem Antrieb (13) zu ermöglichen, sich zu drehen, während der drehbare Proberöhrchenständerhalter (1) vom Drehen abgehalten wird.

15. Proberöhrchenständerdrehvorrichtung nach Anspruch 11, wobei die Drehvorrichtung eine Gesamtlänge entlang der Drehachse von weniger als 58 cm aufweist, wie etwa weniger als 53 cm, wie etwa weniger als 48 cm, wie etwa weniger als 43 cm, wie etwa weniger als 38 cm, wie etwa weniger als 33 cm, wie etwa weniger als 28 cm, wie etwa weniger als 23 oder wie etwa weniger als 18 cm.

## Revendications

1. Support de porte-tubes rotatif pour un dispositif de rotation de porte-tubes (1), comprenant :
- trois ou quatre plaques (2) s'étendant radialement depuis un axe de rotation (3) du support de porte-tubes, dans lequel lesdites plaques sont reliées entre elles ;
- un ou plusieurs compartiment(s) (4) pour maintenir fermement un ou plusieurs porte-tubes (5), chaque porte-tubes étant conçu pour maintenir une pluralité de tubes (6), dans lequel le(s)dit(s) compartiment(s) (4) est/sont fixé(s) sur au moins un côté de ladite / desdites plaque(s) (2) et conçu de sorte que lesdits un ou plusieurs porte-tubes (5) peuvent être placés à l'intérieur desdits compartiment(s) (4) à partir d'une direction perpendiculaire auxdites plaques (2) ; et
- un mécanisme de verrouillage (7) pour chacun dudit/desdits compartiment(s) (4) et conçu de sorte que, lorsque ledit/lesdits porte-tubes (5) maintenant une pluralité desdits tubes (6) est/sont placé(s) à l'intérieur dudit compartiment (4), lesdits tubes (6) ne peuvent pas être déplacés dans une direction perpendiculaire auxdites plaques (2).

2. Support de porte-tubes rotatif selon la revendication 1, dans lequel lesdites trois ou quatre plaques (2) comprennent une structure monobloc.

3. Support de porte-tubes rotatif selon l'une quelconque des revendications précédentes, dans lequel lesdites plaques (2) a/ont une longueur sur ledit axe de rotation de moins de 55 cm, telle que moins de 50 cm, telle que moins de 45 cm, telle que moins de 40 cm, telle que moins de 35 cm, telle que moins de 30 cm, telle que moins de 25 cm, telle que moins de 20 cm, telle que moins de 15 cm.

4. Support de porte-tubes rotatif selon l'une quelconque des revendications précédentes, dans lequel le(s)dit(s) compartiment(s) (4) comprend/comprennent un ou plusieurs murs.

5. Support de porte-tubes rotatif selon la revendication 4, dans lequel ladite/lesdites paroi(s) comprend/comprennent une partie desdites plaques.

6. Support de porte-tubes rotatif selon l'une quelconque des revendications précédentes, dans lequel ledit mécanisme de verrouillage (7) est conçu pour verrouiller le(s) porte-tubes (5) et lesdits tubes (6) dans le(s)dit(s) compartiment(s) (4) et/ou dans lequel ledit mécanisme de verrouillage (7) pour chaque compartiment a une première position pour permettre le placement dudit porte-tubes dans ledit compartiment et une seconde position pour empêcher lesdits tubes de se déplacer dans une direction perpendiculaire à ladite plaque.

7. Support de porte-tubes rotatif selon l'une quelconque des revendications précédentes, dans lequel ledit mécanisme de verrouillage (7) comprend un couvercle.

8. Support de porte-tubes rotatif selon la revendication 7, dans lequel ledit couvercle (7) comprend une charnière actionnée par ressort (8) et/ou dans lequel ledit couvercle (7) comprend un verrou actionné par ressort (9) et/ou dans lequel ledit couvercle (7) est conçu pour assembler par emmanchement lesdits tubes (6) dans le(s)dit(s) porte-tubes (5) tout en les refermant.

9. Support de porte-tubes rotatif selon l'une quelconque des revendications précédentes, dans lequel ledit support de porte-tubes comprend en outre un premier moyen de stabilisation (10) et un second moyen de stabilisation (11) conçu pour stabiliser ladite/lesdites plaque(s).

10. Support de porte-tubes rotatif selon la revendication 9, dans lequel ledit premier moyen de stabilisation (10) est fixé à une première extrémité de ladite / desdites plaque(s) sur ledit axe de rotation (3) et dans lequel ledit second moyen de stabilisation (11) est fixé à une extrémité opposée de ladite / desdites plaque(s) sur ledit axe de rotation (3) et/ou dans lequel ledit premier moyen de stabilisation (10) comprend un premier moyen de fixation conçu pour le montage sur un premier moyen de montage dans ledit dispositif de rotation de porte-tubes et/ou dans lequel ledit second moyen de stabilisation (11) comprend un second moyen de fixation conçu pour le montage sur un second moyen de montage dans ledit dispositif de rotation de porte-tubes (1).

11. Dispositif de rotation de porte-tubes pour la rotation d'un support de porte-tubes rotatif (1) selon la revendication 1, comprenant :
- un mécanisme d'actionnement (13) conçu pour faire tourner ledit support de porte-tubes rotatif (1) sur un axe de rotation ;
- un premier moyen de montage (14) conçu pour être monté avec ledit support de porte-tubes rotatif (1) ;
- un second moyen de montage (15) comprenant un palier et situé à une certaine distance sur ledit axe de rotation de sorte que ledit support de porte-tubes rotatif peut être monté entre ledit premier moyen de montage et ledit second moyen de montage ;
et
- un moyen d'arrêt (16) conçu de sorte à empêcher ledit support de porte-tubes rotatif de tourner.

12. Dispositif de rotation de porte-tubes selon la revendication 11, dans lequel ledit moyen d'arrêt (16) comprend une ou plusieurs saillies (17) conçue (s) pour se mettre en prise avec une partie dudit support de porte-tubes rotatif à partir d'une direction perpendiculaire audit axe de rotation, empêchant ainsi ledit support de porte-tubes rotatif de tourner.

13. Dispositif de rotation de porte-tubes selon la revendication 11, dans lequel ledit moyen d'arrêt comprend un moyen pour enclencher et/ou désenclencher (18) ledit moyen d'arrêt (16).

14. Dispositif de rotation de porte-tubes selon la revendication 11, dans lequel ledit moyen d'arrêt (16) comprend un embrayage (19) pour permettre audit mécanisme d'actionnement (13) de tourner tout en empêchant ledit support de porte-tubes rotatif (1) de tourner.

15. Dispositif de rotation de porte-tubes selon la revendication 11, dans lequel ledit dispositif de rotation a une longueur totale sur ledit axe de rotation de moins de 58 cm, telle que moins de 53 cm, telle que moins de 48 cm, telle que moins de 43 cm, telle que moins de 38 cm, telle que moins de 33 cm, telle que moins de 28 cm, telle que moins de 23 cm, telle que moins de 18 cm.
